# EUROPEAN PATENT SPECIFICATION

(11) **EP 0 477 375 B1**
(45) Date of publication and mention of the grant of the patent: **30.08.1995**
(21) Application number: 91906272.9
(22) Date of filing: 13.03.1991
(51) Int. Cl.: B23K 20/02, G02C 5/00, C22C 19/03

(54) **JOINED METALLIC WORK CONTAINING SHAPED MEMBER OF NICKEL-TITANIUM ALLOY AND PRODUCTION THEREOF**
METALLISCHES WERKSTÜCK, DAS NICKEL-TITANLEGIERUNG BESTEHENDE ELEMENTE ENTHÄLT UND DESSEN HERSTELLUNG
OUVRAGE METALLIQUE COMPORTANT DES ELEMENTS USINES D'ALLIAGE NICKEL-TITANE ET PRODUCTION

(30) Priority: 14.03.1990 JP 65075/90; 14.03.1990 JP 65076/90
(43) Date of publication of application: 01.04.1992
(73) Proprietor: MASUNAGA MENLO PARK CO., LTD., Fukui-ken 910-37 (JP); THE FURUKAWA ELECTRIC CO., LTD., Tokyo 100 (JP)
(72) Inventor: MASUNAGA, Satoru, Fukui-shi, Fukui-ken 910-37 (JP)
(74) Representative: Pearce, Anthony Richmond
(86) International application number: PCT/JP91/00339
(87) International publication number: WO 91/13717

(56) References cited:
- EP-A- 0 338 586
- JP-A- 0 612 551
- JP-A- 6 284 883
- JP-A-58 155 942
- US-A- 4 952 044

## Description

### Technical Field

This invention relates to a method of manufacturing a bonded metal product which includes a shaped nickel-titanium alloy material, and more particularly relates to a method of manufacturing a bonded metal product by bonding a shaped nickel-titanium alloy having shape memory or super-elastic properties, which is very difficult to bond, onto a nickel base alloy material quickly and correctly at the required location. Thus, the invention can provide a wide range of uses for nickel-titanium alloys having a shape memory or super-elastic property, through which good quality bonded products, for example, eyeglasses frames, can be obtained.

### BACKGROUND ART

At present, a nickel-titanium alloy in which fixed proportions of nickel and titanium at an atomic ratio of 1:1, or the approximate ratio, has been confirmed as being of an extremely special nature and this alloy as a new material has been attracting public attention in every industrial field. For instance, a certain kind of nickel-titanium alloy, by which a superior memory effect can be obtained through heat treatment, has been developed for various uses in the medical field, such as bone-connecting parts in orthopedics and operation clips for aneurisms, and also in other practical fields such as in automatic regulating apparatus for air ejecting degree of an air conditioner, in automatic window operation apparatus for greenhouses and/or isothermal houses and in spaceship antennae.

Another kind of nickel-titanium alloy, which has super-elastic properties and chemical attainment and which is quite light in weight, has been actually used as a core material for clothes such as brassieres and corsets, as a wire for dental row correction, and in eyeglasses frames. As mentioned, this alloy is anticipated to be widely useful throughout the industrial world.

Prior art methods of bonding the above-mentioned nickel-titanium alloys to other metals result in an inferior quality of metallic bond. In order to bond such nickel-titanium alloys over small areas, especially for eyeglasses, mechanical connection by use of rivet or screw is necessary, or else a metal plating appropriate for bonding is provided additionally on the surface of the bonding area followed by brazing.

The rivet or screw method has the following defects: the rivetting or screwing operation is quite troublesome and of low effectiveness; the connecting parts are easy to turn round on the axis of the rivet or screw; and the bonding areas cannot be made smaller than the size of the rivet or screw axis.

The brazing method, on the other hand, has a defect that the durability of bonding is weak to external impact because the durability is only dependent upon the adherence caused by the plating stratum.

Another way to bond this nickel-titanium alloy is a normal melt welding method. The inventor actually tried this method of bonding and found that the heat supplied during melt welding changed the original nature of the alloy so that it lost its shape memory or super-elastic properties, and at the same time the welded portions became easily oxidized thereby losing durability. Accordingly, this melt welding method cannot be considered as a practical method.

All the defects mentioned above naturally restrict the scope of use of such nickel-titanium alloys. With regard to eyeglasses, for example, the production of each part needs to be of small size for total design appearance, with the result that it is necessary for the bonding area of each part to be as small as possible, but it is quite difficult to obtain satisfactory durability by the use of prior art bonding techniques for the reasons mentioned above. Therefore, it is one of the main reasons that the eyeglasses made of nickel-titanium alloy are not currently prevalent on the market.

In view of the above situation, the present inventor has developed a novel method for bonding nickel-titanium alloys having shape memory quality or super-elasticity onto other shaped metal materials.

EP-A-0338586 discloses a method of joining an eyeglass temple part made of a super-elastic Ti-Ni-V alloy to a stainless steel end cap by mechanically fixing the cap to the temple part and joining by soldering.

### TECHNICAL PROBLEM

An object of the present invention is to provide a novel method of bonding a shaped nickel-titanium alloy material to another shaped material made of a nickel base alloy of similar or different type, without impairing any shape memory or super-elasticity properties of such nickel-titanium alloy.

According to the present invention, there is provided a method of manufacturing a bonded metal product which includes a shaped part formed of a nickel-titanium alloy whose nickel content is 40 - 60 atomic %, and whose titanium content is 60 - 40 atomic % with the optional replacement of up to 10 atomic % of the nickel or titanium with one or more of V, Al, Co, Cr, Fe, Cu, Nb and Zr, and another shaped alloy part formed of a base nickel alloy, said method comprising bonding said shaped part to said another shaped part over respective bonding portions of such shaped parts using a heat joining process; characterised in that said bonding is effected by rapidly heating and pressing together the bonding portions of said shaped parts in an inert atmosphere so that said shaped parts are subjected to localised softening in the bonding portions and are pressed together whereby to produce a forged metallurgical bond between the bonding portions.

The term "shaped metal of nickel-titanium alloy" mainly means the forming metal of nickel-titanium alloy equipped with shape memory and super-elasticity, and this alloy is composed of 60-40% nickel content and 40-60% titanium content, or else this alloy is obtained by the following contents: Instead of nickel or titanium, one or more than two elements such as vanadium (V), aluminium (Al), cobalt (Co), chromium (Cr), steel (Fe), copper (Cu), niobium (Nb) and zirconium (Zr) are contained therein without exceeding its contents below 10%.

The term "nickel base alloy" means a so-called general nickel base alloy other than explained aforesaid.

The inventor contacted forming metal of nickel-titanium alloy onto other nickel base alloy of similar quality or of different quality, whereon the two alloys were incorporated in a metallurgical bonding on the contacting spot forming forging structure during the procedures of eyeglasses frame production, and thus he has succeeded to provide bonded metal property in which the forming metal of nickel-titanium alloy is bonded correctly.

In other words, the forging structure which is formed on the contacting spot can be obtained by pressing the alloys together in heat-effect melt conditions. These alloys can be selected as eyeglasses parts.

Now, in order to perform bonding, a similar nickel-titanium alloy or a different nickel base alloy is selected as said another shaped part, the reason for this being based on the metallurgy theory that both alloys contain nickel.

The reason of forming the forged metallurgical bond at the bonding spots is to provide a strong and reliable mutual bonding of both parts.

When the shaped nickel-titanium alloy part is bonded onto the shaped nickel base alloy part, the bonding spots of both materials are heated rapidly to become melt-softened in the inert atmosphere and each spot in a heated soft condition is bonded together by high pressure, whereupon the forged metallurgical bond is obtained.

As explained above, the forged metallurgical bond at the bonding spots is attained by high pressure connection during heat-effect softening condition.

For the manufacturing method, the detailed explanations are further provided as below:
When a given portion of the shaped metal composed of nickel-titanium alloy is bonded onto the shaped metal composed of nickel base alloy, the nickel-titanium alloy can be as one part selected from the alloy composed of 60-40% nickel and 40-60% titanium content or shape memory alloy composed of similar alloy but including more than two elements of V, Al, Co, Cr, Fe, Cu, Nb and Zr, without exceeding 10% as its composition, or also super-elastic alloy, while the nickel base alloy can be as the other part selected from nickel-molybdenum alloy, or nickel-chromium alloy or else nickel-chromium-steel alloy.

The bonding portion of the shaped part formed of the nickel-titanium alloy can be pre-arranged for annealing treatment. At the same time, the proximal areas of the bonding spots of both the nickel-titanium alloy and the nickel base alloy parts may be covered with a thermally conductive metal to form a radiator-like device, whereby overheating is avoided except at the bonding spots, and high temperature is rapidly supplied thereupon to melt the spots to produce the metallurgical bond between the parts. Eyeglasses parts can be also adopted from this bonding material.

The "bonding portion" in this specification means the bonding spot and its proximal areas.

### BRIEF DESCRIPTION OF DRAWINGS

Fig. 1 is a perspective view of eyeglasses metal frame as produced by the embodiment of the present invention.

Fig. 2 is a partly enlarged plan view of the bonding portion for a brace bar in the same eyeglasses.

Fig. 3 is an explanatory view showing a bending test for a front frame in the same eyeglasses.

Fig. 4 is an explanatory view showing a tensile stress test for the bending portion.

### BEST MODE FOR CARRYING OUT THE INVENTION

### Embodiment Example 1

A 1.4mm diameter and 7cm long wire rod of nickel-titanium super-elastic alloy composed of 50-51 atomic % nickel, 50-49 atomic % titanium and other components below 0.5 atomic % is to be bonded onto a 2mm diameter and 10cm long rod of nickel-chromium alloy composed of 81 wt% of nickel, 13 wt% of chromium and 7 wt% of other components, at the tip of each end.

First, on the proximal areas of the bonding portion for the super-elastic alloy, high frequency heating is supplied for annealing, and the bonding portion is purified by extracting oxides, oils and fats therefrom. Similarly, the proximal areas of the bonding portion for the nickel-chromium alloy are also purified.

Secondly, each bonding portion is contacted at a 2mm square surface and fixed by a jig, and then, while 20kg/mm² pressure is supplied on the bonding spot, a chromium copper plate is covered over around the proximal areas. The resultant assembly is placed in the inert gas (argon) atmosphere, and 3 cycles of 1000A electric current at 3 volts is passed therethrough, whereon each bonding portion becomes instantly incandescent in a melted condition and is bonded to the other as an integral body by the said pressure. The metal product obtained by this method is called "Specimen 1". The temperature at this instant spot is measured at between 1,300 - 1,400°C.

### Embodiment Example 2

A 1.4mm diameter and 7cm long wire rod of nickel-titanium shape memory alloy composed of 40-60 atomic % nickel, 60-40 atomic % titanium, below 3 atomic % copper and below 0.5 atomic % other components is to be bonded onto a 2mm diameter and 10cm long rod of nickel-copper alloy (= monel metal) composed of more than 63 wt% nickel and more than 21 wt% copper in the almost same manner as described in Embodiment Example 1 except that the electric current is 1,500A. By this method, a very sturdy bonding is obtained. The resultant product metal is called "Specimen 2".

### Embodiment Example 3

An actual metal frame of eyeglasses is now produced in the following manner.

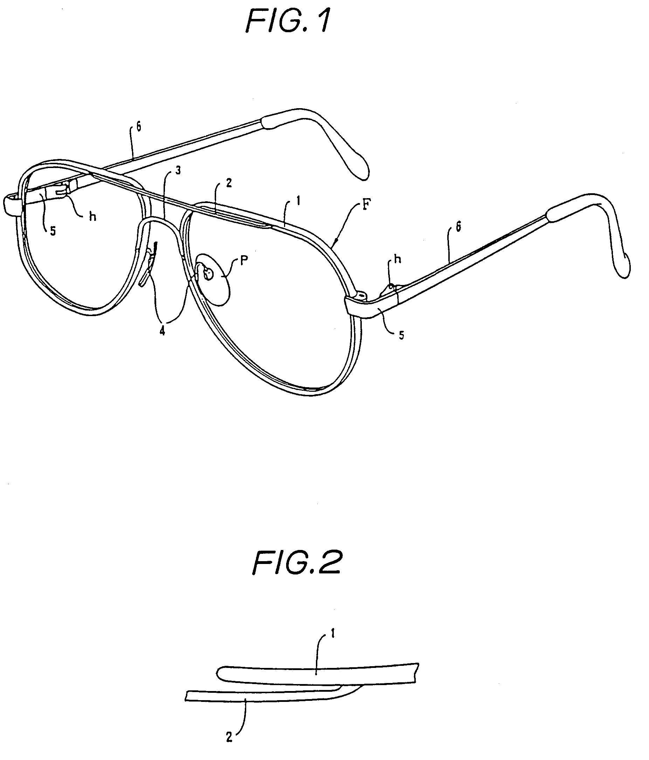

Referring now to Figs 1 and 2, reference numeral 1 indicates a pair of rims to hold a pair of lenses (not shown) and it is located in symmetry. In this embodiment, each rim 1 is formed of a nickel-chromium alloy composed of 80 wt% nickel. 13 wt% of chromium and 7 wt% of other components, and also it is produced by nickel-copper alloy (= monel metal) composed of more than 63 wt% of nickel and more than 21 wt% of copper.

Reference numeral 2 indicates a brace bar in the form of a long rod bridging the rims 1, while reference numeral 3 indicates an arched bridge disposed below the brace bar 2. The rims 1, brace bar 2 and bridge 3 constitute a front frame F of a metallic eyeglasses frame. Both the brace bar 2 and the bridge 3 are formed of a nickel-titanium super-elastic alloy composed of 50-51 atomic % nickel, 50-49 atomic % titanium and 0.5 atomic % or below of other components.

Reference numeral 4 indicates a pair of pad arms, each supporting a nose pad P. The pad arms 4 are bonded in symmetry at the foot of the bridge 3. Each pad arm 4 is formed of a nickel-titanium shape memory alloy composed of 40-60 atomic % nickel, 60-40 atomic % titanium, 3 atomic % or below of copper and 0.4 atomic % or below of other components. This shape memory alloy is pre-arranged at both martensitic and austenitic temperatures so that the crystal structure transformed into the martensitic condition returns to the original austenitic condition when dipped into water at 70°C.

Reference numeral 5 indicates a pair of endpieces in flat spring bent into an L-shape to be connected with respective ends of the front frame F.

Each endpiece 5 is formed of the same nickel-titanium super-elastic alloy as the brace bar 2 and the bridge 3.

Reference numeral 6 indicates a pair of ear-engaging arms to be connected with the endpieces 5 via a hinge h. The arms 6 are also formed of the same nickel-titanium super-elastic alloy as the brace bar 2 and the bridge 3.

In this Embodiment Example 3, the brace bar 2 and the bridge 3 are bonded onto the rims 1. The pad arms 4 are also bonded into the respective rims 1 in the proximity areas of the respective feet of the bridge 3, whilst the end pieces 5 are bonded onto the respective ends of the front frame F. All these bonded portions form forged metal structures with a metallurgical bond. In order to bond the nickel-titanium alloy with the nickel base alloy, the bonding portion of each alloy is heated to be melted in an inert gas (eg argon gas) atmosphere, when both alloys are pressed together by high pressure in an instant. Through this instant heating treatment, the bonding portion and proximal areas form a very strong forged metallurgical bond.

The bonding treatment for actual eyeglasses parts will now be explained in detail.

First, all bonding ends of such eyeglasses parts as the brace bar 2, the bridge 3 and the pad arms 4 composed of nickel-titanium alloy are partly annealed by high frequency heating. Secondly, such impurities as oxides, oils, fats and so on are completely removed for clean treatment. Similarly, the rims 1 composed of nickel base alloy are completely cleaned.

Then, the end sections of each of the eyeglasses parts 2, 3, and 4 are secured by an air cylinder vice so that they are correctly contacting the rims 1. Chromium copper bands are wound around all contacting portions including proximal areas to act as heat radiators. Then 3 cycles of a 1,000 - 2,000A electric current are passed for 0.05 seconds therethrough in an inert gas (= argon gas) atmosphere, whereupon all bonding portions become incandescent instantly to be melted at 1,300 - 1,450°C, and at this instant, a 20kg/mm² is applied thereto by the air cylinder vice, and thus both alloys are completely bonded together. After cooling the same for three minutes at normal temperature, the bonding portions were broken and carefully examined. As a result, it was confirmed that the internal structure of the bonding portion constitutes a uniform forged metallurgical bond with a thickness of 0.5 - 1mm around its forging areas as a integrally united body.

### Test

Specimen 1 obtained in Embodiment Example 1 and Specimen 2 obtained in the Embodiment Example 2 are tested as follows.

### (1) Bending Test

The two Specimens 1 and 2 were subjected to a bending test, which was performed by 90 degree bending toward front and back (total bending of 180 degrees) at a rate of 30 times per minute, for a total 240 cycles. As a result, the two specimens restored their original form without any visible deformation, and also no deterioration in elastic force was observed.

### (2) Tensile Stress Test

The two Specimens 1 and 2 were tested by a tensile tester model No. AGS-A manufactured by Kabushiki Kaisha Shimadzu Seisakusho, and the results are shown below. The test was performed in a condition in which both ends of the specimen were tightly pinched by a clamp and those ends were pulled forcibly apart.

### (2)-1 Specimen 1

When the tensile load became 82.7 kgf, the object was broken at the spot of the super-elastic metal wire. This strength is quite effective for practical use.

### (2)-2 Specimen 2

When the tensile load became 55.1 kgf, the object was broken at the spot of nickel-copper alloy (= monel metal) wire. The obtained strength is also satisfactory for practical use.

Now, according to the Embodiment Example 3, a brace bar 2 having a diameter of 1.4mm and a length of 7cm and a bridge 3 having a diameter of 1.2mm and a length of 3.5cm, both being composed of a nickel-titanium super-elastic alloy consisting of at 50-51 atomic % nickel, 50-49 atomic % titanium and below 0.5 atomic % of other components, were bonded onto rims 1 having a diameter of 2mm and a circumference of 18cm composed of a nickel-chromium alloy consisting of 80 wt% nickel, 12 wt% chromium and 7 wt% or below of other components. The resultant bonded metal structure is now called "Specimen 3" (see Figure 2). On the other hand, a pad arm 4 having a diameter of 1mm diameter and a length of 15cm and composed of a nickel-titanium shape memory alloy consisting of 40-60 atomic % nickel, 60-40 atomic % titanium, 3 atomic % or below of copper and 0.4 atomic % or below of other components, was bonded onto a rim 1 having a diameter of 2mm and a circumference of 15cm composed of a nickel-copper alloy (= monel metal) consisting of 63 wt% or over of nickel and 21 wt% or over of copper. The resultant metal product is now called "Specimen 4". The difference in conditions for forming these two obtained properties only resides in the heating electric current, namely Specimen 3 was subjected to 1,000A current while Specimen 4 was subjected to 1,500A.

### (1) Bending Test

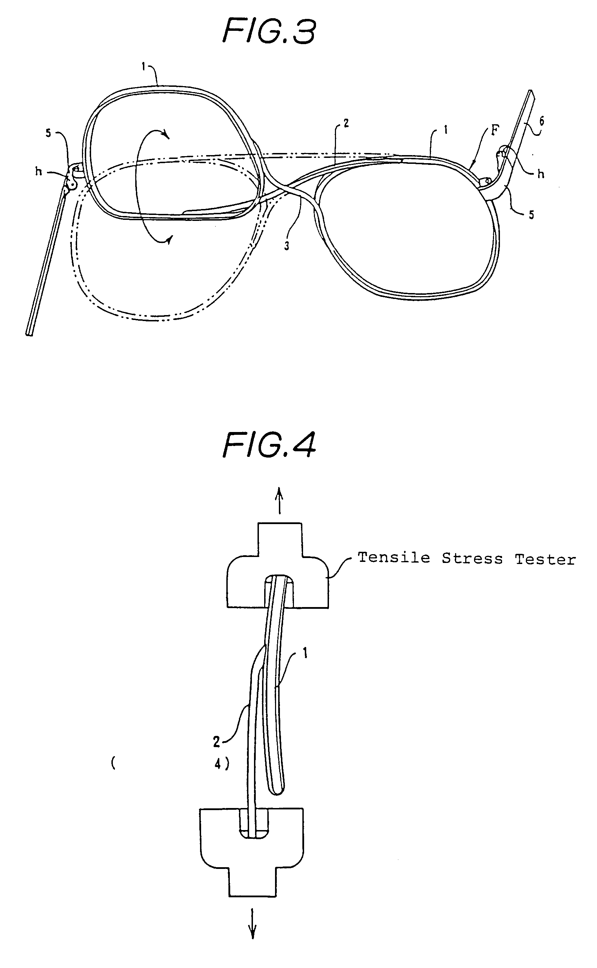

With regard to Specimen 3, as Fig. 3 shows, the bending test was performed with 90 degree bending toward front and back (total 180 degrees) at a speed of 30 times per minute, with a total of 240 bending cycles being made. The result shows that no visible deformation nor deterioration of elastic strength was found.

### (2) Tensile Stress Test

A portion extending for about 3cm on each side of the center where the brace bar 2 and the rims 1 were bonded together in Specimen 3 was cut out for testing, while about 15mm on each side was cut out in the case of Specimen 4, and they were subjected to testing using tensile tester model No. AGS-A manufactured by Kabushiki Kaisha Shimadzu Seisakusho in the same manner as aforesaid. The following results were obtained:-

### (2)-1 Specimen 3

When the tensile load indicated 82.7 kgf, the test sample broke on the spot of the super-elastic metal wire. This strength is quite enough for the requirements to produce the front frame for eyeglasses.

### (2)-2 Specimen 4

When the tensile load indicated 55.1 kgf, the test sample broke on the spot of the bending portion. This sturdiness also satisfies the requirements to produce a pad arm for eyeglasses.

### (3) Shape Memory Test

Concerning Specimen 4, in order to show whether the bonding treatment might affect the pre-set shape memory or not, the Specimen 4 was bent 5mm at 20°C temperature atmosphere. After this bending, it was contacted with hot water at 70°C, when the original form as pre-set was obtained in almost perfect condition.

The present invention is not limited to the above-mentioned embodiments. For instance, in the above-described embodiments, partial annealing treatment is performed on the nickel-titanium alloy, and this annealing treatment is for the additional purpose for prevention breakage at a later pressing stage. Such annealing procedure is not necessary when the bonded material is of sufficient thickness or size as not to incur risk of breakage in a post treatment. It is also possible to produce the bonding portions of each material so to be protruding whereby centralization of heating can be effected thereupon. These kinds of procedure are included within the scope of the present invention.

### INDUSTRIAL APPLICABILITY

As has been shown above, this invention enables the manufacture of a bonded metal product in which a strong bond between a shape memory or super-elastic nickel-titanium alloy material and another nickel base alloy material can be obtained even if the bonding areas are quite small. This is useful in eyeglassses industry, the medical equipment industry and also in all industrial fields.

On the other hand, in accordance with the method of the present invention, through which nickel-titanium alloy material and nickel base alloy material are both heat pressed in melted conditions to produce a forged structure at the bonding portion and to bond both materials so as to form an integral metallurgical bond, the nickel-titanium alloy material can be strongly bonded to other different nickel base alloy materials which are quite difficult to bond using prior art techniques.

At the same time, in the method of the present invention, the nickel-titanium alloy material and the nickel base alloy material are heated so much as to be melted, but the heated portion is restricted to only a very narrow area and also the heating time is very short, with the result that such heating does not fatally affect the required properties except in the heated areas. Also, correct bonding can be achieved in a very rapid manner.

## Claims

1. A method of manufacturing a bonded metal product which includes a shaped nickel-titanium alloy material which includes a shaped part (2,3 4 or 5) formed of a nickel-titanium alloy whose nickel content is 40 - 60 atomic % and whose titanium content is 60 - 40 atomic % with the optional replacement of up to 10 atomic % of the nickel or titanium with one or more of V, Al, Co, Cr, Fe, Cu, Nb and Zr, and another shaped alloy part (1) formed of a base nickel alloy, said method comprising bonding the shaped part (2, 3, 4 or 5) to said another shaped alloy part (1) over respective bonding portions of such parts using a heat joining process; characterised in that said bonding is effected by rapidly heating and pressing together the bonding portions of the shaped parts (2, 3, 4 or 5; and 1) in an inert atmosphere so that the shaped parts are subjected to localised softening in the bonding portions and are pressed together whereby to produce a forged metallurgical bond between the bonding portions.

2. A method according to claim 1, wherein the nickel-titanium alloy is a shape memory nickel-titanium alloy or a super-elastic nickel-titanium alloy, and wherein said nickel base alloy is a nickel-copper alloy, a nickel-molybdenum alloy or a nickel-chromium-steel alloy.

3. A method according to claim 1 or 2, wherein the bonding portion of the shape nickel-titanium alloy part (2 to 5) is partially annealed prior to bonding.

4. A method according to any preceding claim, wherein a heat radiating device made of a heat-conductive metal material is formed covering the areas in the proximity of the bonding portions of the nickel-titanium alloy and nickel base alloy parts (2 to 5, and 1) to prevent overheating of other portions of the shaped parts and to ensure that only the bonding portions and proximal areas thereof are heated until the metallurgical bond is obtained.

5. A method according to any preceding claim, wherein the shaped parts (2 to 5; and 1) are eyeglasses parts.

## Patentansprüche

1. Verfahren zur Herstellung eines verbundenen Metallprodukts, das ein geformtes Material aus einer Nickel-Titan-Legierung umfaßt, das ein geformtes Teil (2, 3, 4 oder 5) umfaßt, das aus einer Nickel-Titan-Legierung gebildet ist, deren Nickelgehalt 40-60 Atomprozent beträgt, und deren Titangehalt 60-40 Atomprozent beträgt, bei wahlfreier Ersetzung von bis zu 10 Atomprozent des Nickels oder Titans durch ein oder mehrere Elemente aus der Gruppe V, Al, Co, Cr, Fe, Cu, Nb und Zr, und ein weiteres geformtes Legierungsteil (1) umfaßt, das aus einer Legierung auf Nickelbasis gebildet ist, wobei bei diesem Verfahren das geformte Teil (2, 3, 4 oder 5) mit dem weiteren geformten Legierungsteil (1) über jeweilige Verbindungsbereiche dieser Teile mittels eines Wärmevereinigungsprozesses verbunden wird; dadurch gekennzeichnet, daß zur Ausführung dieser Verbindung die Verbindungsbereiche der geformten Teile (2, 3, 4 oder 5; und 1) in einer inerten Atmosphäre rasch erhitzt und zusammengepreßt werden, so daß die geformten Teile einer örtlichen Erweichung in den Verbindungsbereichen unterworfen werden und zusammengepreßt werden, um eine geschmiedete metallurgische Verbindung zwischen den Verbindungsbereichen zu verwirklichen.

2. Verfahren gemäß Anspruch 1, bei dem die Nickel-Titan-Legierung eine Formgedächtnis-Nickel-Titan-Legierung oder eine superelastische Nickel-Titan-Legierung ist, und bei dem die Legierung auf Nickelbasis eine Nickel-Kupfer-Legierung, eine Nickel-Molybdän-Legierung, oder eine Nickel-Chrom-Eisen-Legierung ist.

3. Verfahren gemäß Anspruch 1 oder 2, bei dem der Verbindungsbereich des Teils (2 bis 5) aus der Formgedächtnis-Nickel-Titan-Legierung vor dem Verbinden teilweise geglüht wird.

4. Verfahren gemäß irgendeinem vorhergehenden Anspruch, bei dem eine aus einem wärmeleitenden, metallischen Material bestehende, wärmeabstrahlende Vorrichtung gebildet wird, die die Gebiete in der Nähe der Verbindungsbereiche der Teile (2 bis 5; und 1) aus der Nickel-Titan-Legierung und der Legierung auf Nickelbasis bedeckt, um eine Überhitzung anderer Bereiche der geformten Teile zu verhindern, und um sicherzustellen, daß nur die Verbindungsbereiche und die proximalen Gebiete dieser geformten Teile erhitzt werden, bis die metallurgische Verbindung erhalten wird.

5. Verfahren gemäß irgendeinem vorhergehenden Anspruch, bei dem die geformten Teile (2 bis 5; und 1) Brillenteile sind.

## Revendications

1. Procédé de fabrication d'un objet métallique assemblé comprenant un alliage nickel-titane mis en forme, qui comprend une pièce mise en forme (2, 3, 4 ou 5) constituée d'un alliage nickel-titane dont la teneur en nickel est comprise entre 40 et 60% en atomes et dont la teneur en titane est comprise entre 60 et 40% en atomes, avec le remplacement facultatif de 10% en atomes au maximum du nickel ou du titane par un ou plusieurs des métaux choisis dans le groupe formé de V, Al, Co, Cr, Fe, Cu, Nb et Zr et une autre pièce d'alliage mise en forme (1) constitué d'un alliage à base de nickel, ledit procédé consistant à assembler la pièce mise en forme (2, 3, 4 ou 5) à l'autre pièce d'alliage mise en forme (1) par des parties d'assemblage correspondantes de ces pièces, en utilisant un procédé d'assemblage thermique, caractérisé en ce que ledit assemblage est effectué en chauffant rapidement et en pressant l'une contre l'autre les parties d'assemblage des pièces mises en forme (2, 3, 4 ou 5; et 1) sous atmosphère inerte, de façon que les pièces mises en forme soient soumises à un ramollissement localisé dans les parties d'assemblage et soient pressées l'une contre l'autre, de manière à obtenir un assemblage métallurgique forgé entre les parties d'assemblage.

2. Procédé selon la revendication 1, dans lequel l'alliage nickel-titane est un alliage nickel-titane à mémoire de forme ou un alliage nickel-titane super-élastique, et dans lequel ledit alliage à base de nickel est un alliage nickel-cuivre, un alliage nickel-molybdène ou un alliage nickel-chrome-acier.

3. Procédé selon la revendication 1 ou 2, dans lequel la partie d'assemblage de la pièce mise en forme en alliage nickel-titane (2 à 5) est partiellement recuite avant l'assemblage.

4. Procédé selon l'une quelconque des revendications précédentes, dans lequel un dispositif de rayonnement thermique, constitué d'un métal conducteur de la chaleur est formé pour couvrir les régions à proximité des parties d'assemblage des pièces en alliage nickel-titane et en alliage à base de nickel (2 à 5, et 1) pour empêcher la surchauffe des autres parties des pièces mises en forme et pour assurer qu'uniquement les parties d'assemblage et les zones voisines de celles-ci soient chauffées jusqu'à l'obtention de l'assemblage métallurgique.

5. Procédé selon l'une quelconque des revendications précédentes, dans lequel les pièces mises en forme (2 à 5; et 1) sont des pièces de lunettes.
